# EUROPEAN PATENT APPLICATION

(11) **EP 3 135 979 A1**
(43) Date of publication of application: **01.03.2017**
(21) Application number: 16182471.9
(22) Date of filing: 02.08.2016
(51) Int. Cl.: F16L 37/56, F16L 39/00

(54) **PIPE-IN-PIPE QUICK CONNECTION STRUCTURE**

(30) Priority: 24.08.2015 CN 201520638946 U
(71) Applicant: Xiamen Runner Industrial Corporation, Xiamen 361021 (CN)
(72) Inventor: WU, Xiao Feng, Jimei, Xiamen 361021 (CN); ZHANG, Rong Gui, Jimei, Xiamen 361021 (CN)
(74) Representative: Cabinet Chaillot

(57) **Abstract**

A pipe-in-pipe quick connection structure comprises: an outer pipe (1), an inner pipe (7), disposed in the outer pipe (1); a water input piece, sleeved around one end of the outer pipe (1); a water output piece, sleeved around the other end of the outer pipe (1), two connectors (5), each inserted into each end of outer pipe (1) , and connected respectively to the water input piece and the water output piece; two inner pipe fixing rings (6) each being used to fix each connector (5) and the inner pipe (7), and two outer pipe connection rings (3), each sleeved around an outer wall of each connector (5), and connected respectively to the water input piece and the water output piece.

## Description

### BACKGROUND OF THE INVENTION

### Field of the Invention

The present invention relates to a quick connection structure, and in particular to a pipe-in-pipe quick connection structure.

### The Prior Arts

Presently, the pipe connection structure has the shortcomings of having a complicated structure and occupying a too large space. As such, its installation is slow and it occupies the space used for installing the pipelines.

Therefore, presently, the design and performance of pipe connection structure is not quite satisfactory, and it leaves much room for improvement.

### SUMMARY OF THE INVENTION

In view of the problems and drawbacks of the prior art, the present invention provides a pipe-in-pipe quick connection structure, that is simple in structure, and fast to install.

The present invention provides a pipe-in-pipe quick connection structure, comprising: an outer pipe; an inner pipe, a water input piece, a water output piece, two connectors, two inner pipe fixing rings, and two outer pipe connection rings. The inner pipe is disposed in the outer pipe. The water input piece is sleeved around one end of the outer pipe. The water output piece is sleeved around the other end of the outer pipe. The two connectors are each inserted into each end of the outer pipe, and are connected respectively to the water input piece and the water output piece. The two inner pipe fixing rings are each used to fix each connector and the inner pipe. And the two outer pipe connection rings are each sleeved around an outer wall of each connector, and are connected respectively to the water input piece and the water output piece.

In an aspect of the present invention, the pipe-in-pipe quick connection structure further includes: two positioning protrusions, each disposed around outer perimeter of each outer pipe connection ring; two fix protrusion pins, disposed symmetrically around the outer perimeter of the outer pipe connection rings on two sides of the positioning protrusion; two positioning and guiding slots, disposed respectively on the water input piece and the water output piece, to act in cooperation respectively with the two positioning protrusions; and two positioning and fixing holes, disposed respectively on the water input piece and the water output piece, to act in cooperation respectively with the two fix protrusion pins.

In another aspect of the present invention, the pipe-in-pipe quick connection structure further includes: two copper sleeves, each sleeved around each end of the outer pipe.

In yet another aspect of the present invention, two tight seal slots are each provided on each of the connectors; while two tight seal rings are each provided on each tight seal slot.

Compared with the existing technology, the pipe-in-pipe quick connection structure has the following advantages in that, it is simple in structure, occupying less space, fast to install, having a good hand feel, and convenient to use.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detailed descriptions.

### BRIEF DESCRIPTION OF THE DRAWINGS

The related drawings in connection with the detailed descriptions of the present invention to be made later are described briefly as follows, in which:
Fig. 1 is a schematic diagram of a pipe-in-pipe quick connection structure according to an embodiment of the present invention;
Fig. 2 is an exploded view of a pipe-in-pipe quick connection structure according to an embodiment of the present invention; and
Fig. 3 is an enlarged view of the encircled portion of a pipe-in-pipe quick connection structure according to an embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

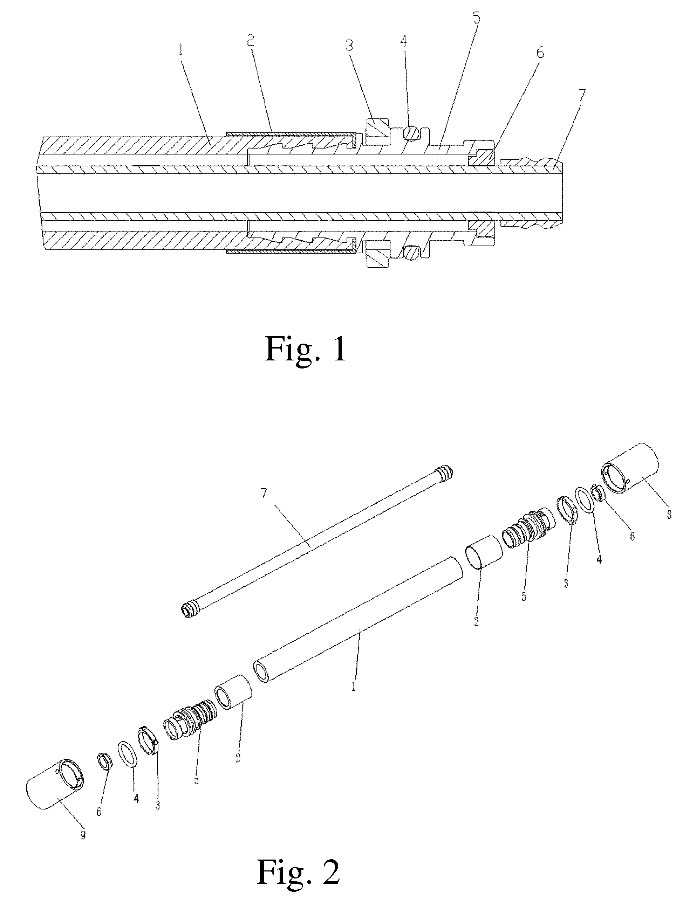

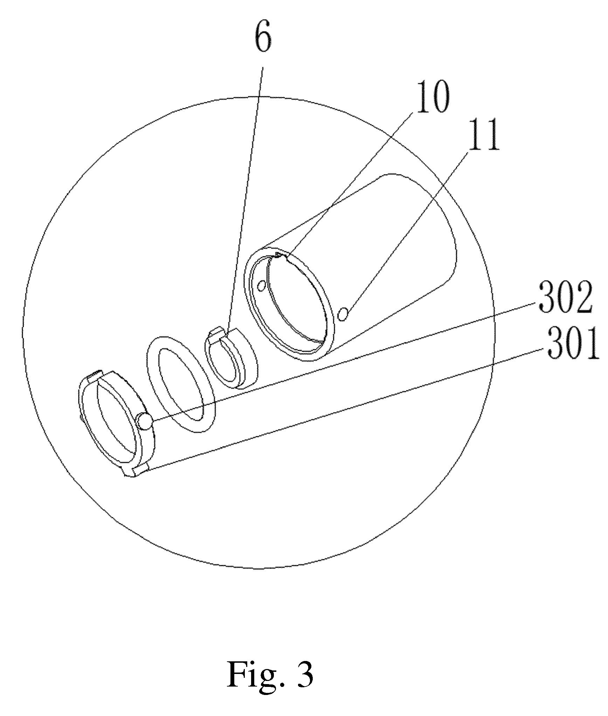

Refer to Figs. 1 to 3 for a schematic diagram of a pipe-in-pipe quick connection structure according to an embodiment of the present invention; an exploded view of a pipe-in-pipe quick connection structure according to an embodiment of the present invention; and an enlarged view of the encircled portion of a pipe-in-pipe quick connection structure according to an embodiment of the present invention.

As shown in Figs. 1 to 3, the present invention provides a pipe-in-pipe quick connection structure, comprising: an outer pipe 1; an inner pipe 7, a water input piece 8, a water output piece 9, two connectors 5, two inner pipe fixing rings 6, and two outer pipe connection rings 3. The inner pipe 7 is disposed in the outer pipe 1. The water input piece 8 is sleeved around one end of the outer pipe 1. The water output piece 9 is sleeved around the other end of the outer pipe 1. The two connectors 5 are each inserted into each end of the outer pipe 1, and are connected respectively to the water input piece 8 and the water output piece 9. The two inner pipe fixing rings 6 are each used to fix each connector 5 and the inner pipe 7. And the two outer pipe connection rings 3 are each sleeved around an outer wall of each connector 5, and are connected respectively to the water input piece 8 and the water output piece 9.

In an embodiment of the present invention, the pipe-in-pipe quick connection structure further comprising: two positioning protrusions 301, each disposed around outer perimeter of each outer pipe connection ring 3; two fix protrusion pins 302, disposed symmetrically around the outer perimeter of the outer pipe connection rings 3 on two sides of the positioning protrusion 301; two positioning and guiding slots 10, disposed respectively on the water input piece 8 and the water output piece 9, to act in cooperation respectively with the two positioning protrusions 301; and two positioning and fixing holes 11, disposed respectively on the water input piece 8 and the water output piece 9, to act in cooperation respectively with the two fix protrusion pins 302.

In an embodiment of the present invention, the pipe-in-pipe quick connection structure further comprising: two copper sleeves 2, each sleeved around each end of the outer pipe 1.

In an embodiment of the present invention, two tight seal slots are each provided on each of the connectors 5; while two tight seal rings 4 are each provided on each tight seal slot.

The application of the pipe-in-pipe quick connection structure are described as follows:

In application, each of the two inner pipe fixing rings 6 are used to fix the inner pipe 7 and each of the connectors 5; then the two fix protrusion pins 302 on the outer pipe connection rings 3 are fastened respectively into the respective positioning and fixing holes 11 on the water input piece 8 and the water output piece 9, to realize connection of the inner pipe 7 and the outer pipe 1 together.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A pipe-in-pipe quick connection structure, comprising:
an outer pipe;
an inner pipe, disposed in the outer pipe;
a water input piece, sleeved around one end of the outer pipe;
a water output piece, sleeved around the other end of the outer pipe;
two connectors, each inserted into each end of the outer pipe, and connected respectively to the water input piece and the water output piece;
two inner pipe fixing rings, each being used to fix each connector and the inner pipe; and
two outer pipe connection rings, each sleeved around an outer wall of each connector, and connected respectively to the water input piece and the water output piece.

2. The pipe-in-pipe quick connection structure as claimed in claim 1, further comprising:
two positioning protrusions, each disposed around an outer perimeter of each outer pipe connection ring;
two fix protrusion pins, disposed symmetrically around the outer perimeter of the outer pipe connection rings on two sides of the positioning protrusion;
two positioning and guiding slots, disposed respectively on the water input piece and the water output piece, to act in cooperation respectively with the two positioning protrusions; and
two positioning and fixing holes, disposed respectively on the water input piece and the water output piece, to act in cooperation respectively with the two fix protrusion pins.

3. The pipe-in-pipe quick connection structure as claimed in claim 2, further comprising: two copper sleeves, each sleeved around each end of the outer pipe.

4. The pipe-in-pipe quick connection structure as claimed in claim 3, further comprising:
two tight seal slots, each provided on each connectors; and
two tight seal rings, each provided on each tight seal slot.
